# EUROPÄISCHE PATENTSCHRIFT

(11) **EP 0 951 460 B1**
(45) Veröffentlichungstag und Bekanntmachung des Hinweises auf die Patenterteilung: **23.04.2003**
(21) Anmeldenummer: 98907926.4
(22) Anmeldetag: 05.01.1998
(51) Int. Cl.: C04B 35/56, C04B 35/58, C04B 35/563, C04B 35/583

(54) **FORMMASSEN UND VERFAHREN ZUR HERSTELLUNG VON METALLISCH AUSSEHENDEN KERAMIKFORMKÖRPERN**
MOULDING COMPOUNDS AND METHOD OF PRODUCING CERAMIC MOULDED BODIES WITH A METALLIC APPEARANCE
MATIERES DE MOULAGE ET PROCEDE DE PRODUCTION DE CORPS DE MOULAGE EN CERAMIQUE A ASPECT METALLIQUE

(30) Priorität: 09.01.1997 DE 19700528
(43) Veröffentlichungstag der Anmeldung: 27.10.1999
(73) Patentinhaber: BASF AKTIENGESELLSCHAFT, 67056 Ludwigshafen (DE)
(72) Erfinder: HESSE, Werner, D-67283 Obrigheim (DE)
(74) Vertreter: Isenbruck, Günter, Dr.
(86) Internationale Anmeldenummer: EP9800030
(87) Internationale Veröffentlichungsnummer: WO98030516

(56) Entgegenhaltungen:
- EP-A- 0 467 539
- EP-A- 0 700 880
- DE-A- 3 335 414
- US-A- 3 652 304
- US-A- 5 043 121

## Beschreibung

Die Erfindung betrifft Spritzguß- oder Kunststoffpreßformmassen, insbesondere Granulate, und ein Verfahren zur Herstellung von metallisch aussehenden Keramikformkörpern.

Für viele Anwendungen sind die Kratzfestigkeit und ein antiallergisches Verhalten von Gegenständen wie Uhrengehäusen ein wichtiges Qualitätsmerkmal. Solche Gegendstände werden in großer Zahl aus metallischen Werkstoffen von Edelstahl bis hin zu Gold hergestellt. Diese Werkstoffe haben zum einen den Nachteil, daß sie allergieauslösend wirken können, wenn sie beispielsweise Nickel enthalten. Zum anderen sind sie aufgrund ihrer geringen Härte oftmals nicht kratzfest. Keramische Werkstoffe weisen diese Nachteile im allgemeinen nicht auf, dafür haben sie in der Regel nicht den erwünschten metallischen Glanz und keine silberne bis goldene Farbe.

Um keramischen Werkstoffen einen metallischen Glanz zu verleihen, können beispielsweise Nitride wie Titannitrid mit Metalloxiden wie Aluminiumoxid oder Zirkoniumoxid zu Keramiken gesintert werden, die die gewünschten Eigenschaften aufweisen.

In der US 3,652,304 sind homogene nicht-poröse Zusammensetzungen beschrieben, die 10 bis 50 Vol.-% Aluminiumoxid, Zirkoniumoxid oder deren Gemische und 50 bis 90 Vol.-% Titannitrid, Tantalnitrid oder Zirkoniumnitrid enthalten. Pulvergemische dieser Substanzen werden naß vermahlen, wobei ein gesättigter paraffinischer Kohlenwasserstoff eingesetzt wird. Nach Entfernen des Kohlenwasserstoffs wird das Pulvergemisch in einer Graphitform heiß gepresst, um beispielsweise ein Uhrengehäuse zu erhalten. Das Heißpressen ist eine sehr teure Technologie, die zudem nur die Herstellung von Teilen mit relativ einfacher Geometrie erlaubt. Zudem wird durch Verwendung eines Graphittiegels beim Heißpressen eine dunkel verfärbte Goldfarbe erreicht.

In der DE-C-33 35 414 ist ein Verfahren zur Herstellung von Keramikgegenständen aus Titannitrid und Zirkoniumoxid beschrieben. Es werden 0,1 bis weniger als 10 Gew.-% Zirkoniumoxid eingesetzt. Ein Pulvergemisch aus Titannitrid und Zirkoniumoxid wird in Aceton oder Methanol naß vermahlen. Das pulverisierte Gemisch wird sodann getrocknet, mit 4 Gew.-% Paraffin versetzt und unter Druck preßgeformt. Danach wird das Bindemittel Paraffin entfernt und bei einer Temperatur von 1750°C bis 1800°C in einer Inertgasatmosphäre oder unter vermindertem Druck gesintert. Die verbesserte Sinteraktivität wird durch das Vermahlen der Pulver über mehrere Tage und die dadurch erzielte geringe Teilchengröße erreicht. Die so erhaltenen Werkstoffe weisen geringe Bruchzähigkeiten von 3,0 bis 3,4 MPa m^{0,5} auf. Die Herstellung von Formteilen über Pressverfahren ermöglicht wiederum nur die Herstellung einfacher Formen.

In der EP-B-0 467 539 ist ein Verfahren zur Herstellung von Keramiken beschrieben. Dabei werden Titannitrid mit einer durchschnittlichen Teilchengröße von 0,06 µm und Zirkoniumoxid mit einer Kristallgröße von 0,08 µm, das mit 2,5 Mol.-% Yttriumoxid beschichtet ist, in Isopropanol über 16 Stunden vermahlen. Die so erhaltene Aufschlämmung wird zu einem Pulver getrocknet und uniaxial in Scheibenform gepreßt. Die Proben werden sodann unter Stickstoffatmosphäre gesintert. Es werden wiederum sehr feinteilige Pulver benötigt, um die gewünschte Sinteraktivität zu erhalten. Diese extrem feinen Pulver werden nur über Uniaxialpressen verarbeitet, so daß nur sehr einfache Formen zugänglich sind. Die Sinterprodukte weisen metallischen Glanz, insbesondere eine Goldfarbe auf.

Die Herstellung farbiger Spritzgußformteile aus Formmassen mit z.B. Oxidpulvern und 30 - 60 Vol.-% organischem Bindemittel ist aus EP-A-700 880 bekannt.

Aufgabe der vorliegenden Erfindung ist die Bereitstellung von Spritzguß- oder kunststoffpreßformmasssen, die zu komplexen Formteilen verarbeitet werden können, wobei dekorative metallisch aussehende Keramikformkörper zugänglich werden, die verschleißbeständig und korrosionsbeständig sind. Zudem sollen die Formkörper antiallergisch sein.

Die Aufgabe wird erfindungsgemäß gelöst durch Spritzguß- oder kunststoffpreßformmassen, enthaltend
(a) ein organisches Bindemittel, dessen Anteil, bezogen auf das Gesamtvolumen der Formmasse, 30 bis 70 Vol.-% beträgt, als Komponente A,
(b) mindestens ein Nitrid, Carbonitrid oder Carbid mindestens eines Übergangsmetalls oder von Bor als Komponente B und
(c) mindestens ein Oxid von Aluminium, Zirkonium, Yttrium, Cer oder Magnesium als Komponente C,
wobei Komponenten B und C in Komponente A dispergiert vorliegen.

Diese Formmassen lassen sich über Spritzgußverfahren zu komplexen Formkörpern formen, die nach Entbindern und Sintern metallisch aussehende Keramikformkörper ergeben, die die vorstehend geforderten Eigenschaften aufweisen. Sie können somit in einem wirtschaftlichen Verarbeitungsverfahren dem Pulverspritzgußverfahren, hergestellt werden.

Beim Pulverspritzgußverfahren, das die Herstellung von komplex geformten Teilen ermöglicht, ist es erforderlich, die Materialpulver mit einem organischen Bindemittel zu einer thermoplastisch verarbeitbaren Masse zu verbinden. Ein solches organisches Bindemittel ist die in den erfindungsgemäßen Formmassen enthaltene Komponente A. Der Anteil des Bindemittels, bezogen auf das Gesamtvolumen der Formmasse, beträgt 30 bis 70 Vol.-%, vorzugsweise 40 bis 60 Vol.-%. Als organisches Bindemittel kommen alle thermoplastischen Bindemittel in Betracht, in denen das nachstehend beschriebene Pulvergemisch der Komponenten B und C dispergiert werden kann, wobei das Bindemittel vor dem Sintern wieder entfernt werden kann.

Beispielsweise können organische Bindemittel auf Paraffin- oder Polyolefinbasis eingesetzt werden. Bei Verwendung dieser Bindemittel muß bei der Entbinderung darauf geachtet werden, daß bei der Zersetzung des organischen Bindemittels keine Riß- oder Lunkerbildung und auch kein Verzug des Formkörpers auftreten. Deshalb sollte schonend und sehr langsam entbindert werden.

Vorzugsweise werden organische Bindemittel eingesetzt, die ein Polyacetal enthalten. Das Polyacetal ist dabei vorzugsweise Polyoxymethylen. Derartige Bindemittel sind in der EP-A-0 413 231 beschrieben. Dieses Bindemittel kann in einfacher Weise in einer gasförmigen säurehaltigen oder gasförmiges Bortrifluorid enthaltenden Atmosphäre entfernt werden, wobei keine Bindemittelschmelze entsteht, die ein Verformen des Formkörpers verursachen könnte. Im Bindemittel können Homo- und Copolymerisate von Polyoxymethylen vorliegen. Beispielsweise kann das Bindemittel aus einer Mischung aus 70 bis 90 Gew.-% eines Polyoxymethylenhomo- oder copolymerisats mit bis zu 10 Mol.-% Comonomereinheiten und 10 bis 30 Gew.-% eines Polyoxymethylencopolymerisats mit einem Comonomeranteil von 20 bis 99 Mol.-% Poly-1,3-dioxolan, Poly-1,3-dioxan oder Poly-1,3-dioxepan oder eines im Polyoxymethylenhomo- oder copolymerisat homogen gelösten oder mit einer mittleren Teilchengröße von weniger als 1 µm dispergierten Polymerisats oder deren Mischungen bestehen. Vorzugsweise wird dabei bei Verwendung eines homogen gelösten oder dispergierten Polymerisats ein aliphatisches Polyurethan, aliphatisches unvernetztes Polyepoxid, Poly(C₂₋₆-alkylenoxid), aliphatisches Polyamid oder Polyacrylat oder ein Gemisch daraus verwendet. Geeignete Bindemittel dieser Art sind in der EP-A-0 444 475 beschrieben. Weitere geeignete organische Bindemittel auf Polyoxymethylen-Basis sind in EP-A-0 465 940 und EP-A-0 446 708 beschrieben.

Im organischen Bindemittel als Komponente A werden die Komponenten B und C dispergiert. Komponente B ist mindestens ein Nitrid, Carbonitrid oder Carbid mindestens eines Übergangsmetalls oder von Bor. Vorzugsweise ist das Übergangsmetall oder sind die Übergangsmetalle ausgewählt aus Elementen der Gruppen IVa, Va und VIa des Periodensystems der Elemente. Besonders bevorzugt werden Titan-, Tantal-, Zirkonium- oder Hafniumnitrid oder -carbid, insbesondere Titannitrid oder Tantalcarbid verwendet. Die Nitride, Carbonitride oder Carbide sind silber- bis goldfarbene und zugleich sehr harte Verbindungen. Sie sind als solche allerdings nicht zu mechanisch belastbaren Formteilen verarbeitbar. Sie werden deshalb im Gemisch mit mindestens einem Oxid von Aluminium, Zirkonium, Yttrium, Cer oder Magnesium als Komponente C eingesetzt. Es kann ein Gemisch dieser Oxide verwendet werden. Vorzugsweise wird Zirkoniumdioxid eingesetzt, das insbesondere mit Yttriumoxid tetragonal stabilisiert ist (abgekürzt: TZP).

Vorzugsweise weist das Pulvergemisch aus Komponenten B und C eine mittlere Korngröße von maximal 5 µm, besonders bevorzugt von maximal 2 µm auf. Die mittleren Korngrößen sollten dabei nicht unterhalb von 0,1, vorzugsweise nicht unterhalb von 0,2 µm liegen. Die mittleren Korngrößen beziehen sich dabei auf das nicht agglomerierte Pulver. Die Bildung von weichen Agglomeraten wirkt sich nicht negativ auf die erfindungsgemäßen Formmassen und deren Verarbeitung aus. In diesen weichen Agglomeraten können die Korngrößen entsprechend höher sein. Es können dabei kommerziell erhältliche Pulver der Komponente B mit Korngrößen zwischen 0,6 und 2 µm (FSSS) und Pulver der Komponente C Korngrößen von 0,3 bis 1,0 µm verwendet werden. Dabei liegen im Pulvergemisch vorzugsweise 10 bis 97, besonders bevorzugt 60 bis 95, insbesondere 70 bis 90 Gew.-% der Komponente B und 3 bis 90, besonders bevorzugt 5 bis 40, insbesondere 10 bis 30 Gew.-% der Komponente C vor.

Die Komponenten B und C bzw. deren Pulvergemisch lassen sich sehr gut in den vorstehend beschriebenen organischen Bindemitteln dispergieren. Extrem feine Pulver, wie sie in der EP-A-0 467 539 beschrieben sind, können nur sehr erschwert in ausreichend hohem Maße im Bindemittel dispergiert werden. Durch die Verwendung von Pulvergemischen mit der vorstehenden Teilchengröße kann auf eine vorangehende Naßmahlung der Ausgangspulver verzichtet werden. Dies führt neben einer Kosteneinsparung für das Mahlen der Pulver in einem Lösungsmittel und anschließende Trocknung auch zu einer Verbesserung der Fließeigenschaften beim Spritzguß und zu einer Verkürzung der notwendigen Entbinderungszeiten.

Neben dem Bindemittel können in der erfindungsgemäßen Formmasse weitere organische Additive zur Dispergierung und/oder Oberflächenmodifikation enthalten sein. Es können auch Netzmittel, Plastifiziermittel oder andere Hilfsmittel, die die rheologischen Eigenschaften der Granulate bei der Verformung beeinflussen, zudosiert werden.

Zur Herstellung der erfindungsgemäßen Formmassen wird ein Gemisch der Komponenten A, B und C sowie gegebenenfalls vorliegender weiterer organischer Additive oder Hilfsmittel hergestellt. Das Mischen kann ohne eine vorausgehende Naßmahlung bei Temperaturen von 150°C bis 200°C durch Kneten oder Extrudieren erfolgen. Anschließend können die Formmassen abgekühlt und granuliert werden. So kann ein erfindungsgemäßes Granulat der Formmasse erhalten werden. Die erfindungsgemäßen Formmassen beziehungsweise Granulate werden zur Herstellung von Keramikformkörpern verwendet. Dabei werden sie insbesondere im Spritzgußverfahren eingesetzt. Im bevorzugten Verfahren zur Herstellung von Keramikspritzgußformkörpern wird eine erfindungsgemäße Formmasse oder ein erfindungsgemäßes Granulat im Spritzgußverfahren geformt, sodann entbindert und gesintert. Das Granulat kann mit Hilfe üblicher Schnecken- oder Kolbenspritzgußmaschinen in Formen geleitet und bei Temperaturen von typischerweise 175°C bis 200°C und bei Drücken von typischerweise 200 bis 2000 bar verformt werden. Nach Erstarren der Formmasse werden die erhaltenen Grünlinge entformt und sodann entbindert.

Die erfindungsgemäßen Formmassen bzw. Granulate können auch im Kunststoffpreßverfahren geformt werden. Dabei wird die Formmasse bzw. deren Granulat in der gewünschten Form vorzugsweise bei Temperaturen von 175 bis 200°C aufgeschmolzen. Dabei schmilzt das Bindemittel, und die Formmasse wird unter Druck geformt bzw. verdichtet. Bei diesem Pressformen wird wird die Formmasse blasenfrei bzw. lunkerfrei. Die so geformte Masse wird wie im Spritzgußverfahren weiterverarbeitet, d.h. abgekühlt, entformt und gesintert.

Das Verfahren der Entbinderung, d.h. das Entfernen des Bindemittels aus dem Grünling, richtet sich nach der Art des verwendeten Bindemittels. Die Entfernung von Bindemitteln, die Polyacetale enthalten, wird vorzugsweise in gasförmiger, säurehaltiger oder Bortrifluorid enthaltender Atmosphäre vorgenommen. Entsprechende Verfahren sind in EP-A-0 413 231, EP-A-0 444 475, EP-A-0 465 940 und EP-A-0 446 708 beschrieben.

Das Versintern der geformten und entbinderten Formkörper wird vorzugsweise in Inertgasatmosphäre, beispielsweise unter Stickstoff oder Argon, oder unter vermindertem Druck durchgeführt. Es kann auch unter erhöhtem Inertgasdruck gesintert werden (Drucksintern). Die Sinterbedingungen hängen dabei von der Wahl des Pulvergemisches ab. Die benötigten Sintertemperaturen erniedrigen sich dabei mit steigendem Gehalt an Komponente C. Die Formkörper werden beim Sintern vorzugsweise auf einer BN- oder AlN-Unterlage bzw. in BN- oder AlN-Tiegeln gelagert.

Die Erfindung betrifft auch Keramikformkörper mit homogener Dichteverteilung aus einem gesinterten Pulvergemisch der Komponenten B und C, wie es vorstehend definiert ist. Vorzugsweise handelt es sich bei den Keramikformkörpern um Keramikspritzgußformkörper. Sie sind vorzugsweise nach dem vorstehenden Spritzgußverfahren hergestellt. Es kann sich zudem bei den Keramikformkörpern um Keramikpressformkörper handeln. Diese können nach dem vorstehenden Kunststoffpreßverfahren hergestellt sein. Die Formkörper weisen eine homogene Dichteverteilung auf. Das bedeutet, daß in den Keramikformkörpern an allen Punkten die gleiche Dichte herrscht. Diese homogene Dichteverteilung wird durch die Verarbeitung der erfindungsgemäßen Formmassen möglich, die ein organisches Bindemittel enthalten. Insbesondere sind so komplexe Formteile, d.h. Formteile, die an verschiedenen Stellen des Formteils verschiedene Materialdicken aufweisen, zugänglich. In diesen komplexen Formkörpern liegen somit Dickeunterschiede des Materials vor.

Die Qualität der gesinterten Formkörper in bezug auf Dichte, Farbe, Polierbarkeit, Zähigkeit und Härte ist hervorragend. Diese Eigenschaften werden erhalten, obwohl beim Sinterverfahren auf teure Hochdruckverfahren, wie Heiß-isostatisches Pressen verzichtet werden kann.

Bei Verwendung von Zirkoniumoxid als Komponente C verbessern sich mit steigendem Zirkoniumoxidgehalt im Pulvergemisch auch die mechanischen Eigenschaften, wie Festigkeit und Zähigkeit, der erhaltenen Formkörper. Dabei wird die dekorativ metallisch aussehende Oberfläche zunehmend von einem Grauton überlagert. Die Auswahl des Mischungsverhältnisses und der Bestandteile der Komponenten B und C kann sich somit nach der gewünschten Farbe sowie den gewünschten mechanischen Eigenschaften richten. Dabei sollte der Gehalt an Komponente C im Pulvergemisch nicht unter etwa 3 Gew.-%, bezogen auf das Gesamtgewicht des Pulvergemisches, sinken, da sich in diesem Fall die entbinderten Formkörper nicht mehr drucklos dichtsintern lassen.

Die erfindungsgemäß hergestellten Keramikspritzgußformkörper sind verschleißbeständig, korrosionsbeständig, insbesondere kratzfest, antiallergisch und weisen ein dekoratives metallisches Aussehen auf. Das metallische Aussehen kann insbesondere im Bereich von silber- bis goldfarbenem Aussehen variiert werden.

Die erfindungsgemäßen Keramikspritzgußformkörper können als Bestandteile von einer Vielzahl von Gebrauchsgegenständen und als Formkörper selbst eingesetzt werden. Beispiele sind Bestandteile von Uhren, Schmuck, Schreibgeräten, Werkzeugen, Haushaltsgeräten, Türbeschlägen, Feuerzeugen, Schaltern, Lampen. Sie können zudem als Fliesen, Knöpfe, Kultgegenstände (wie Kruzifixe, Heiligenfiguren, Buddhafiguren, Hanko-Stempel oder Rosenkränze) verwendet werden.

Die Erfindung wird nachstehend anhand von Beispielen näher erläutert:

### Beispiel 1

Ein Spritzgußgranulat wurde hergestellt, indem folgende Komponenten in einem beheizbaren Kneter vorgelegt wurden:
1600 g TiN-Pulver, mittlere Teilchengröße 1,0 µm
400 g ZrO₂-Pulver (stabilisiert mit 3 Mol Mol-.% Y₂O₃), mittlere Teilchengröße 0,4 µm
38 g Polyethylenglykol, mittleres Molgewicht ca. 800
56 g Polybutandiolformal, mittleres Molgewicht ca. 30000
413 g Polyoxymethylen mit 2 Gew.-% Butandiolformal.

Die Mischung wurde bei 175°C aufgeschmolzen und für eine Stunde homogenisiert. Anschließend wurde abgekühlt und granuliert. Das Granulat wurde zu Formteilen spritzgegossen, die anschließend in einer Salpetersäure/Stickstoff-Gasatmosphäre bei 120°C entbindert wurden. Beim Sintern in Inertgasatmosphäre bei 1900°C wurden Teile mit einer Dichte von 5,4 g/ml erhalten, was der theoretischen Dichte entspricht. Die gesinterten Teile wurden geläppt und hochglanzpoliert. Die Oberfläche war porenfrei und hatte eine leuchtend TiN-goldene Farbe ohne Graufärbungen. Die Vickershärte wurde zu 1400 bestimmt (Hv 0,5). Die Rißzähigkeit lag bei 6,5 MPa m^{0,5} , bestimmt nach der SEN-Methode (single edge-notched beam).

### Beispiel 2

Ein Spritzgußgranulat wurde hergestellt, indem folgende Komponenten in einem beheizbaren Kneter vorgelegt wurden:
1800 g TaC-Pulver, mittlere Teilchengröße 0,9 µm
450 g ZrO₂-Pulver (stabilisiert mit 3 Mol.-%Y₂O₃), mittlere Teilchengröße 0,4 µm
47 g Polyethylenglykol, mittleres Molgewicht ca. 800
27 g Polybutandiolformal, mittleres Molgewicht ca 30000
200 g Polyoxymethylen mit 2 Gew.-% Butandiolformal.

Die Mischung wurde bei 175°C aufgeschmolzen und für eine Stunde homogenisiert. Anschließend wurde abgekühlt und granuliert. Das Granulat wurde wie in Beispiel 1 angegeben spritzgegossen, und die erhaltenen Teile wurden unter identischen Bedingungen entbindert. Beim Sintern in Inertgasatmosphäre bei 2100°C wurden Teile mit einer Dichte von 11,3 g/ml erhalten, was der theoretischen Dichte entspricht. Die gesinterten Teile wurden geläppt und hochglanzpoliert. Die Oberfläche war porenfrei und hatte eine blaßgoldene Farbe.

## Patentansprüche

1. Spritzguß- oder kunststoffpreßformmasse, enthaltend
(a) ein organisches Bindemittel, dessen Anteil, bezogen auf das Gesamtvolumen der Formmasse, 30 bis 70 Vol.-% beträgt, als Komponente A,
(b) 60 bis 95 Gew.-%, bezogen auf Komponenten B und C, mindestens eines Nitrids, Carbonitrids oder Carbids mindestens eines Übergangsmetalls oder von Bor als Komponente B und
(c) 5 bis 40 Gew.-%, bezogen auf Komponenten B und C, mindestens eines Oxids von Aluminium, Zirkonium, Yttrium, Cer oder Magnesium als Komponente C,
wobei Komponenten B und C in Komponente A dispergiert vorliegen.

2. Formmasse nach Anspruch 1, **dadurch gekennzeichnet, daß** Komponente A ein Polyacetal enthält.

3. Formmasse nach Anspruch 1 oder 2, **dadurch gekennzeichnet, daß** die Übergangsmetalle in Komponente B ausgewählt sind aus Elementen der Gruppen IVa, Va und VIa des Periodensystems der Elemente.

4. Formmasse nach einem der Ansprüche 1 bis 3, **dadurch gekennzeichnet, daß** Komponente C Zirkoniumoxid ist, das mit Yttriumoxid tetragonal stabilisiert sein kann.

5. Formmasse nach einem der Ansprüche 1 bis 4, **dadurch gekennzeichnet, daß** im Pulvergemisch 10 bis 97 Gew.-% der Komponente B und 3 bis 90 Gew.-% der Komponente C vorliegen.

6. Granulat aus einer Formmasse nach einem der Ansprüche 1 bis 5.

7. Verwendung einer Formmasse nach einem der Ansprüche 1 bis 5 oder eines Granulats nach Anspruch 6 zur Herstellung von Keramikformkörpern.

8. Verfahren zur Herstellung von Keramikformkörpern, **dadurch gekennzeichnet, daß** eine Formmasse nach einem der Ansprüche 1 bis 5 oder ein Granulat nach Anspruch 6 im Spritzgußverfahren oder Kunststoffpreßverfahren geformt, sodann entbindert und gesintert wird.

9. Verfahren nach Anspruch 8, **dadurch gekennzeichnet, daß** das Sintern in Inertgasatmosphäre oder unter vermindertem Druck erfolgt.

## Claims

1. An injection-molding or plastics compression-molding composition comprising
(a) an organic binder in a proportion of from 30 to 70% by volume, based on the total volume of the molding composition, as component A,
(b) from 60 to 95% by weight, based on components B and C, of at least one nitride, carbonitride or carbide of at least one transition metal or of boron as component B and
(c) from 5 to 40% by weight, based on components B and C, of at least one oxide of aluminum, zirconium, yttrium, cerium or magnesium as component C,
where components B and C are present as a dispersion in component A.

2. A molding composition as claimed in claim 1, wherein component A comprises a polyacetal.

3. A molding composition as claimed in claim 1 or 2, wherein the transition metals in component B are selected from among elements of groups IVa, Va and VIa of the Periodic Table of the Elements.

4. A molding composition as claimed in any of claims 1 to 3, wherein component C is zirconium oxide which may be stabilized in the tetragonal form by means of yttrium oxide.

5. A molding composition as claimed in any of claims 1 to 4, wherein from 10 to 97% by weight of the component B and from 3 to 90% by weight of the component C are present in the powder mixture.

6. Granules of a molding composition as claimed in any of claims 1 to 5.

7. The use of a molding composition as claimed in any of Claims 1 to 5 or of granules as claimed in claim 6 for producing shaped ceramic bodies.

8. A process for producing shaped ceramic bodies which comprises shaping a molding composition as claimed in any of claims 1 to 5 or granules as claimed in claim 6 by injection molding or plastics compression molding, then subjecting the resulting green body to binder removal and sintering.

9. A process as claimed in claim 8, wherein sintering is carried out in an inert gas atmosphere or under reduced pressure.

## Revendications

1. Matière de moulage moulée par injection ou en matière plastique moulée par compression, contenant
(a) un liant organique, dont la fraction rapportée au volume total de la matière de moulage s'élève à 30 à 70 % en volume, comme composant A,
(b) de 60 à 95 % en poids, rapportés aux composants B et C, d'au moins un nitrure, un carbonitrure ou un carbure d'au moins un métal de transition ou de bore, comme composant B et
(c) de 5 à 40 % en poids, rapportés aux composants B et C, d'au moins un oxyde d'aluminium, de zirconium, d'yttrium, de cérium ou de magnésium comme composant C,
les composants B et C étant présents dans le composant A sous forme dispersée.

2. Matière de moulage selon la revendication 1, **caractérisée en ce que** le composant A contient un polyacétal.

3. Matière de moulage selon la revendication 1 ou 2, **caractérisée en ce que** les métaux de transition dans le composant B sont sélectionnés parmi des éléments des groupes IVa, Va et VIa de la classification périodique des éléments.

4. Matière de moulage selon l'une des revendications 1 à 3, **caractérisée en ce que** le composant C est de l'oxyde de zirconium pouvant être stabilisé à l'oxyde d'yttrium de manière tétragonale.

5. Matière de moulage selon l'une des revendications 1 à 4, **caractérisée en ce que** 10 à 97 % en poids du composant B et 3 à 90 % en poids du composant C sont présents dans le mélange pulvérulent.

6. Granulé provenant d'une matière de moulage selon l'une des revendications 1 à 5.

7. Utilisation d'une matière de moulage selon l'une des revendications 1 à 5 ou d'un granulé selon la revendication 6 pour la production de corps de moulage en céramique.

8. Procédé de production de corps de moulage en céramique, **caractérisé en ce qu'**une matière de moulage selon l'une des revendications 1 à 5 ou qu'un granulé selon la revendication 6 est moulé par injection ou par compression de matière plastique pour être ensuite délianté et fritté.

9. Procédé selon la revendication 8, **caractérisé en ce que** le frittage s'effectue en atmosphère de gaz inerte ou sous une pression réduite.
